(19) Europäisches Patentamt

European Patent Office

Office européen des brevets

(11) **EP 1 107 142 A2**

(12) **EUROPEAN PATENT APPLICATION**

(43) Date of publication:
**13.06.2001 Bulletin 2001/24**

(51) Int Cl.⁷: **G06F 17/60**

(21) Application number: **00126096.7**

(22) Date of filing: **29.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **01.12.1999 JP 34205499**

(71) Applicant: **NEC CORPORATION**
**Tokyo (JP)**

(72) Inventor: **Miyamoto, Shigeyuki,**
**c/o NEC Corporation**
**Tokyo (JP)**

(74) Representative: **Glawe, Delfs, Moll & Partner**
**Patentanwälte**
**Postfach 26 01 62**
**80058 München (DE)**

(54) **Environmental information exhibiting system**

(57)    An environmental information exhibiting system includes (a) a primitive information memory (11) storing a primitive information relating to at least one product, (b) an environmental information manufacturer (12) manufacturing an environmental information, based on the primitive information stored in the primitive information memory (11), and (c) an environmental information exhibitor (14) exhibiting the environmental information manufactured by the environmental information manufacturer (12), through a network (2).

FIG. 2

11 : PRIMITIVE INFORMATION MEMORY
12 : ENVIRONMENTAL INFORMATION MANUFACTURER
13 : CALCULATION RULE TABLE
14 : ENVIRONMENTAL INFORMATION EXHIBITOR
31 : COMMUNICATOR
33 : INPUT INTERFACE
34 : DISPLAY UNIT

EP 1 107 142 A2

**Description**

## BACKGROUND OF THE INVENTION

### FIELD OF THE INVENTION

The invention relates to an environmental information exhibiting system, and more particularly to such a system in which an environmental information is provided by a product manufacturer.

### DESCRIPTION OF THE RELATED ART

An environmental information such as $CO_2$ emission in an use of a product or total $CO_2$ emission in a lifetime of a product has been conventionally exhibited to a consumer from a product manufacturer through a printing material such as a catalogue, a package or an advertisement. However, as a computer network has been developed, there has been suggested an environmental information exhibiting system which exhibits an environmental information of a product through a computer network.

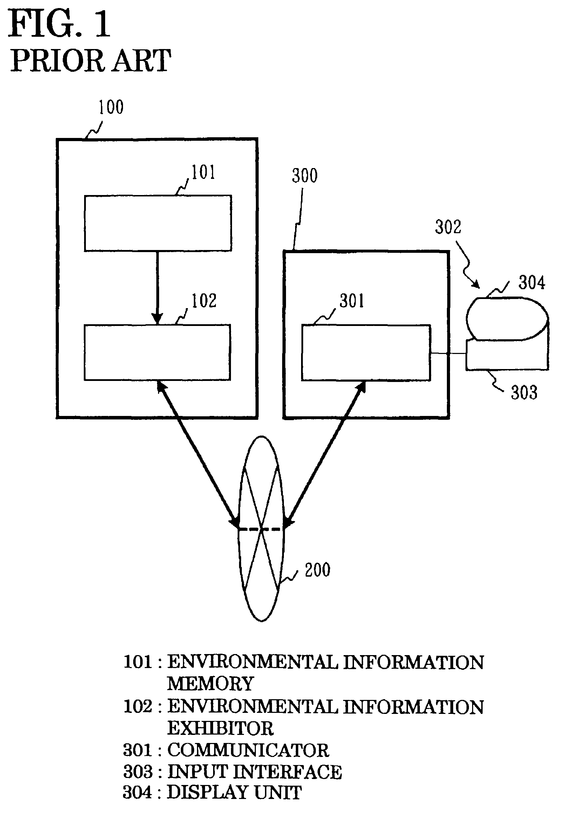

Fig. 1 is a block diagram of a conventional environmental information exhibiting system.

The illustrated conventional environmental information exhibiting system is comprised of an environmental information server 100 through which a product manufacturer exhibits an environmental information, a client computer 300 through which an environmental information reader reads an environmental information, and a network 200 connecting the environmental information server 100 and the client computer 300 to each other.

The environmental information server 100 is comprised of an environmental information memory 101 storing an environmental information about one or more products, and an environmental information exhibitor 102 which exhibits an environmental information stored in the environmental information memory 101, to the client computer 300 through the network 200.

The client computer 300 is equipped with an input/output unit 302 including an input interface 303 and a display unit 304.

The client computer 300 includes a communicator 301 which transmits a request to exhibit an environmental information, input through the input interface 303 by a client computer user, to the environmental information server 100 through the network 200. The communicator 301 further receives an environmental information from the environmental information exhibitor 102 through the network 200, and displays the thus received environmental information on the display unit 304.

An environmental information exhibiting system such as one illustrated in Fig. 1 presently makes use of World Wide Web, and operates through an Internet.

The environmental information exhibiting system illustrated in Fig. 1 operates as follows.

First, a product manufacturer stores an environmental information in the environmental information memory 101. On receipt of a request to exhibit an environmental information, transmitted from the client computer 300 through the network 200, the environmental information exhibitor 102 transmits the environmental information stored in the environmental information memory 101, to the client computer 300 through the network 200. The environmental information is received at the communicator 301, and then, displayed at the display unit 304.

For instance, Japanese Unexamined Patent Publication No. 11-165159 has suggested a system of calculating an amount of disposed material generated when waste is disposed, based on basic data. However, the system does not exhibit a result of calculation to a requestor through a network.

The conventional environmental information exhibiting system illustrated in Fig. 1 is accompanied with problems as follows.

The first problem is that a product manufacturer has to bear a heavy burden.

This is because a product manufacturer has to make an environmental information in accordance with a certain rule, based on a primitive information necessary for obtaining an environmental information, such as power consumption in operation and an amount of material in each of fabrication steps.

In particular, if a product manufacturer continuously provides a lot of new products, the product manufacturer would have to make an environmental information each time the product manufacturer provides a new product, resulting in a heavy burden on the product manufacturer.

The second problem is that comparison in an environmental information among a plurality of products is not taken into consideration.

This is because a product manufacturer makes an environmental information for each of products independently of other products, and hence, a process of making an environmental information may be different among a plurality of products. If a process of making an environmental information is different in products, it would be meaningless to compare an environmental information of a product to an environmental information of another product.

The third problem is that a person who requests to read an environmental information may not be able to access his/her desired environmental information.

This is because an environmental information to be exhibited is selected only by a product manufacturer.

## SUMMARY OF THE INVENTION

In view of the above-mentioned problems in the conventional environmental information exhibiting system, it is an object of the present invention to provide an environmental information exhibiting system which is capable of reducing a burden on a product manufacturer, comparing an environmental information of a certain product to an environmental information of another product, and exhibiting an environmental information requested by an environmental information reader.

In one aspect of the present invention, there is provided an environmental information exhibiting system comprising (a) a primitive information memory storing a primitive information relating to at least one product, (b) an environmental information manufacturer manufacturing an environmental information, based on the primitive information stored in the primitive information memory, and (c) an environmental information exhibitor exhibiting the environmental information manufactured by the environmental information manufacturer, through a network.

There is further provided an environmental information exhibiting system comprising (a) an environmental information server, and (b) at least one client terminal connected to the environmental information server through a network, the client terminal including (b1) an interface receiving data to identify an environmental information which a client terminal user requests the environmental information server to exhibit, and (b2) a communicator transmitting a request made by the interface to the environmental information server through the network, and receiving an environmental information transmitted from the environmental information server, the environmental information server including (a1) a primitive information memory storing a primitive information relating at least one product, (a2) a primitive information retriever retrieving the primitive information stored in the primitive information memory, based on a name of a product included in the request transmitted from the client terminal through the network, (a3) a calculation rule table storing rules and judgment standards in each of environmental information items, a value of each of environmental information items being calculated in accordance with each of the rules, and a calculated value being compared to each of the judgment standards for judgment, (a4) an environmental information manufacturer manufacturing an environmental information in accordance with the request transmitted from the client terminal, and (a5) an environmental information transmitter transmitting the environmental information manufactured by the environmental information manufacturer, to the client terminal through the network.

There is still further provided an environmental information exhibiting system comprising (a) at least one primitive information server, and (b) at least one environmental information server connected to the primitive information server through a network, the primitive information server including (a1) a primitive information memory storing a primitive information relating at least one product, and (a2) a primitive information exhibitor exhibiting a primitive information stored in the primitive information memory, to the environmental information server through the network, the environmental information server including (b1) an environmental information manufacturer manufacturing an environmental information, based on the primitive information exhibited by the primitive information exhibitor through the network, and (b2) an environmental information exhibitor exhibiting the environmental information manufactured by the environmental information manufacturer, to a client terminal through the network.

In another aspect of the present invention, there is provided an environmental information server cooperating with at least one client terminal connected to the environmental information server through a network, to define an environmental information exhibiting system, the client terminal including an interface receiving data to identify an environmental information which a client terminal user requests the environmental information server to exhibit, and a communicator transmitting a request made by the interface to the environmental information server through the network, and receiving an environmental information transmitted from the environmental information server, the environmental information server comprising (a) a primitive information memory storing a primitive information relating at least one product, (b) a primitive information retriever retrieving the primitive information stored in the primitive information memory, based on a name of a product included in the request transmitted from the client terminal through the network, (c) a calculation rule table storing rules and judgment standards in each of environmental information items, a value of each of environmental information items being calculated in accordance with each of the rules, and a calculated value being compared to each of the judgment standards for judgment, (d) an environmental information manufacturer manufacturing an environmental information in accordance with the request transmitted from the client terminal, and (e) an environmental information transmitter transmitting the environmental information manufactured by the environmental information manufacturer, to the client terminal through the network.

There is further provided an environmental information server cooperating with at least one primitive information server connected to the environmental information server through a network, to define an environmental information exhibiting system, the primitive information server including a primitive information memory storing a primitive information relating at least one product, and a primitive information exhibitor exhibiting a primitive information stored in the primitive information memory, to the environmental information server through the network, the environmental information server comprising (a) an environmental information manufacturer manufacturing an environmental information, based on the primitive information exhibited by the primitive information exhibitor through the network, and (b) an environmental information exhibitor exhibiting the environmental information manufactured by the environmental information manufacturer, to a client terminal through the network.

In still another aspect, there is provided a method of exhibiting an environmental information in an environmental information exhibiting system. comprising the steps of (a) storing a primitive information relating to at least one product, (b) manufacturing an environmental information, based on the primitive information stored in the primitive information memory, and (c) exhibiting the environmental information through a network.

There is further provided a method of exhibiting an environmental information in an environmental information exhibiting system, comprising the steps of (a) storing primitive information relating to at least one product, (b) analyzing a request transmitted from a client terminal through a network, (c) retrieving the primitive information, based on a result of analysis carried out in the step (b), (d) manufacturing an environmental information, based on both the retrieved primitive information and the result of analysis carried out in the step (c), and (e) exhibiting the environmental information through the network.

There is still further provided a method of exhibiting an environmental information in an environmental information exhibiting system including an environmental information server, and a client terminal connected to the environmental information server through a network, the method comprising the steps of (a) making a request identifying an environmental information which a client terminal user requests the environmental information server to exhibit, (b) transmitting the request to the environmental information server through the network, (c) storing a primitive information relating at least one product, (d) storing rules and judgment standards in each of environmental information items in a calculation rule table, a value of each of environmental information items being calculated in accordance with each of the rules, and a calculated value being compared to each of the judgment standards for judgment, (e) retrieving the primitive information, based on a name of a product included in the request transmitted from the client terminal through the network, (f) manufacturing an environmental information in accordance with the request transmitted from the client terminal, and (g) transmitting the environmental information to the client terminal through the network.

There is yet further provided a method of exhibiting an environmental information in an environmental information exhibiting system including at least one primitive information server, and at least one environmental information server connected to the primitive information server through a network, the method comprising the steps of (a) exhibiting a primitive information to the environmental information server through the network, (b) manufacturing an environmental information, based on the primitive information exhibited through the network, and (c) exhibiting the environmental information manufactured to a client terminal through the network.

In yet another aspect, there is provided a recording medium readable by a computer, storing a program therein for causing a computer to act as such an environmental information server as mentioned above.

There is further provided a recording medium readable by a computer, storing a program therein for causing a computer to carry out such a method as mentioned above.

The advantages obtained by the aforementioned present invention will be described hereinbelow.

The first advantage is that it is possible to reduce a burden on a product manufacturer which has to exhibit an environmental information. This is because the environmental information manufacturer manufactures an environmental information, based on a primitive information.

The second advantage is that an environmental information can be compared to one another among a plurality of products. This is because the single environmental information manufacturer manufactures all environmental information, based on a primitive information of each of products.

The third advantage is that it is possible to obtain an environmental information requested by an environmental information reader, such as a process by which an environmental information is calculated, or a judgment standard based on which a value of an environmental information is judged. This is because that the environmental information exhibiting system has functions of analyzing a request of an environmental information reader, and retrieving a primitive information, and hence, can make an environmental information in compliance with an environmental information reader's request.

## BRIEF DESCRIPTION OF THE DRAWINGS

Fig. 1 is a block diagram of a conventional environmental information exhibiting system.

Fig. 2 is a block diagram of an environmental information exhibiting system in accordance with the first embodiment.

Fig. 3 illustrates an example of what is stored in the primitive information memory.

Fig. 4 illustrates an example of what is stored in the calculation rule table.

Fig. 5 is a flow chart showing steps to be carried out by the environmental information manufacturer.

Fig. 6 illustrates an example of exhibition layout of an environmental information.

Fig. 7 illustrates another example of exhibition layout of an environmental information.

Fig. 8 illustrates still another example of exhibition layout of an environmental information.

Fig. 9 is a block diagram of an environmental information exhibiting system in accordance with the second embodiment.

Fig. 10 illustrates an example of a screen of a display unit on which an environmental information to be exhibited is designated.

Fig. 11 illustrates another example of a screen of a display unit on which an environmental information to be exhibited is designated.

Fig. 12 is a flow chart showing steps to be carried out by the input analyzer in the environmental information exhibiting system in accordance with the third embodiment.

Fig. 13 is a flow chart showing steps to be carried out by the environmental information manufacturer in the third embodiment.

Fig. 14 illustrates an example of a screen of a display unit on which an environmental information to be exhibited is designated, in the third embodiment.

Fig. 15 is a block diagram of an environmental information exhibiting system in accordance with the fourth embodiment.

Fig. 16 is a block diagram of an environmental information exhibiting system in accordance with the fifth embodiment.

Fig. 17 illustrates examples of recording mediums in which a program for controlling an environmental information server is to be stored.

## DESCRIPTION OF THE PREFERRED EMBODIMENTS

[First Embodiment]

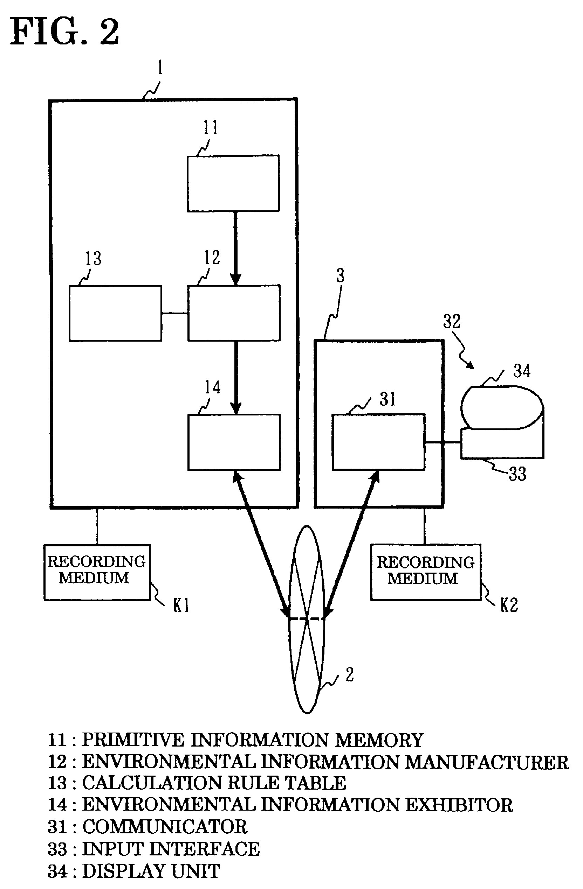

Fig. 2 illustrates an environmental information exhibiting system in accordance with the first embodiment of the first embodiment.

The environmental information exhibiting system is comprised of an environmental information server 1 through which a product manufacturer exhibits an environmental information, a client computer 3 through which an environmental information reader reads an environmental information, and a network 2 through which the environmental information server 1 and the client computer 3 are connected to each other. For instance, the environmental information server 1, the client computer 3, and the network 2 are comprised of a personal computer server, a personal computer and an Internet, respectively, in the first embodiment.

The environmental information server 1 is designed to include a primitive information memory 1, an environmental information manufacturer 12, a calculation rule table 13, an environmental information exhibitor 14, and a recording medium K1.

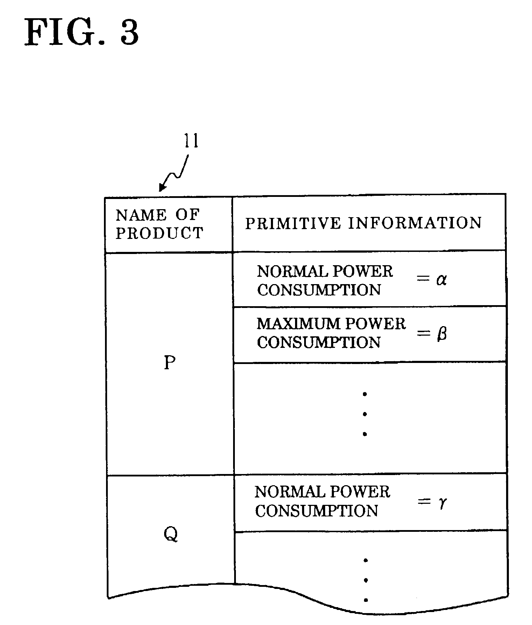

The primitive information memory 11 stores a primitive information about one or more product. Fig. 3 illustrates an example of what is stored in the primitive information memory 11. As illustrated in Fig. 3, the primitive information memory 11 stores names of products and a primitive information in association with each of the names of products.

In Fig. 3, there are stored normal power consumption a and so on as a primitive information of a product named P in association with the name P of the product, and normal power consumption $\gamma$ and so on as a primitive information of a product named Q in association with the name Q of the product.

The calculation rule table 13 stores a process of calculating a value of an environmental information item in association with a name of the environmental information item, and a judgment standard to which a calculated value of an environmental information item is compared for judgment.

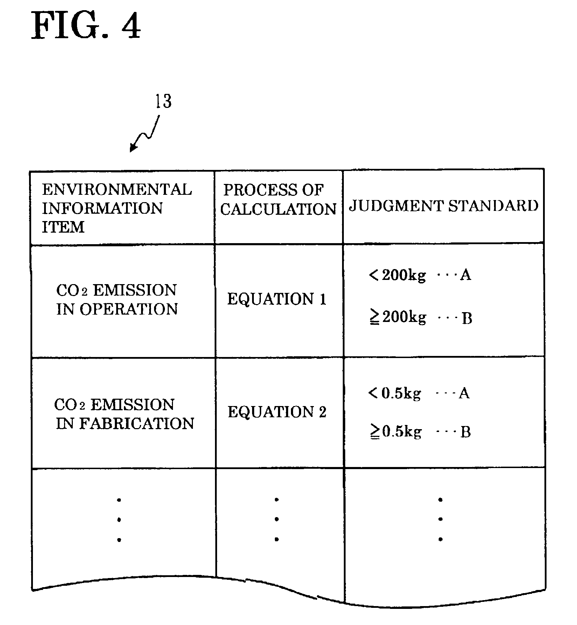

Fig. 4 illustrates an example of what is stored in the calculation rule table 13. Fig. 4 shows, for instance, that a process of calculating "$CO_2$ emission in operation" as one of environmental information items is defined by an equation 1, and that if a value calculated in accordance with the equation 1 is smaller than 200 kilograms, the value is judged as an rank A, or if a value calculated in accordance with the equation 1 is equal to or greater than 200 kilograms, the value is judged as an rank B.

The environmental information manufacturer 12 makes an environmental information, based on both a primitive information stored in the primitive information memory 11 and the calculation rule table 13.

On receipt of a request to exhibit an environmental information, from the client computer 3, the environmental information exhibitor 14 transmits an environmental information having been manufactured by the environmental information manufacturer 12, to the client computer 3 through the network 2.

The recording medium K1 is comprised of, for instance, a magnetic disc. a semiconductor memory, or a magnetic tape, and stores therein a program for operating a computer as the environmental information server 1. The program is read out by a computer, and controls an operation of the computer. As a result, the above-mentioned environmental information manufacturer 12, the calculation rule table 13, and the environmental information exhibitor 14 are realized in the computer.

The client computer 3 includes a communicator 31, an input/output unit 32, and a recording medium K2. The input/output unit 32 is comprised of an input interface 33 and a display unit 34.

The communicator 301 transmits a request to exhibit an environmental information, input through the input interface 30 by a client computer user, to the environmental information server 1 through the network 2. The communicator 31 further receives an environmental information from the environmental information server 1 through the network 2, and displays the thus received environmental information on the display unit 34.

The recording medium K2 is comprised of, for instance, a magnetic disc, a semiconductor memory, or a magnetic tape, and stores therein a program for operating the client computer 3. The program is read out by the client computer 3, and controls an operation of the client computer 3. As a result, the communicator 31 is realized in the client computer 3.

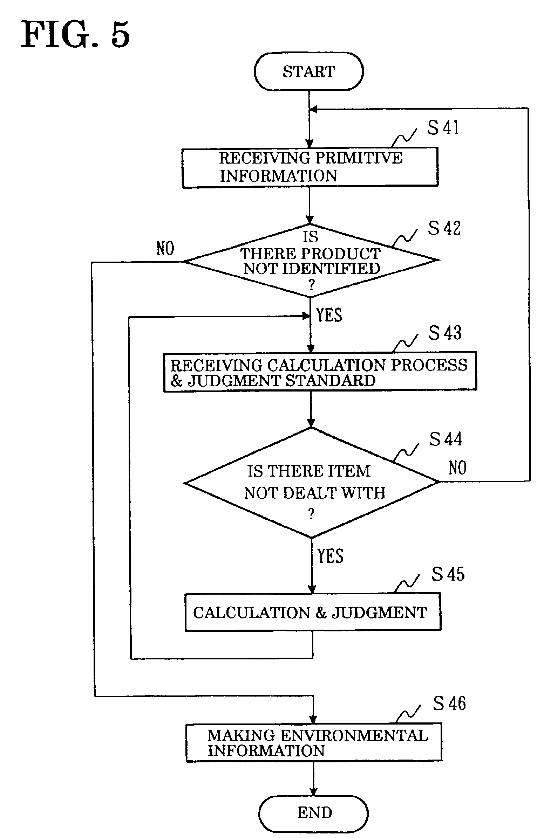

Fig. 5 is a flow chart showing an example of steps to be carried out by the environmental information manufacturer 12.

Hereinbelow is explained an operation of the environmental information exhibiting system in accordance with the first embodiment. First, an environmental information is made as follows.

A product manufacturer stores a primitive information of products in the primitive information memory 11 such that each primitive information is associated with each name of the products, as illustrated in Fig. 3.

Then, the product manufacturer starts operating the environmental information manufacturer 12. The environmental information manufacturer 12 identifies one of names of the products, and receives a primitive information stored in the primitive information memory 11 in association with a name of the identified product, in step S41.

Then, the environmental information manufacturer 12 identifies one of environmental information items stored in the calculation rule table 13, and receives a process of calculation and a judgment standard stored in the calculation rule table 13 in association with the identified environmental information item, in step S43.

Then, the environmental information manufacturer 12 calculates a value of the environmental information item identified in step S43 in connection with the product identified in step S41, based on the primitive information received in step S41 and the calculation process received in step S43, and judges the thus calculated value by comparing to the judgment standard received in step S43, in step S45.

After the value has been judged, the environmental information manufacturer 12 repeatedly carries out the above-mentioned steps S43 and S45 until there is not an environmental information item which is not dealt with by the environmental information manufacturer 12 (NO in step S44).

When the product identified in step S41 has been checked with respect to all environmental information items (NO in step S44), the environmental information manufacturer 12 carries out the above-mentioned steps S41, S43 and S45 for other products.

When there no longer exists a product to be identified by the environmental information manufacturer 12 (NO in step S42), the environmental information manufacturer 12 makes an environmental information including the calculated value and the judgment, in step S46.

The environmental information is exhibited to the client computer 3 as follows.

When a client computer user inputs a request to exhibit an environmental information, through the input interface 33 of the input/output unit 32, the communicator 31 transmits the request to the environmental information server 1 through the network 2. On receipt of the request transmitted from the client computer 3, the environmental information exhibitor 14 transmits the environmental information having been manufactured by the environmental information manufacturer 12, to the client computer 3 through the network 2. The environmental information is received at the communicator 31, and displayed at the display unit 34.

The environmental information exhibiting system in accordance with the first embodiment is designed to include the primitive information memory 11 and the environmental information manufacturer 12. Hence, it is no longer necessary for a product manufacturer to make an environmental information, ensuring reduction of a burden on a product manufacturer.

For instance, when a process of making an environmental information is changed, it is necessary to remake all environmental information in the conventional environmental information exhibiting system. In contrast, even if a process of making an environmental information is changed, what is necessary to do is to give a minor change to the calculation rule table 13. Hence, it is possible to change an environmental information without so much burden.

In addition, in the first embodiment, the primitive information memory 11 stores a primitive information of a plurality of products, and the environmental information manufacturer 12 makes an environmental information, based on a primitive information of each of products. That is, an environmental information for each of products is made in the same manner, ensuring that an environmental information for a certain product can be compared to an environmental information for another product.

Hereinbelow is explained a detailed example of an operation of the environmental information exhibiting system in accordance with the first embodiment.

It is assumed that a primitive information relating to a product named P is received in step S41, and a process of calculating "$CO_2$ emission in operation" and a judgment standard for judging $CO_2$ emission are received in step S43 in Fig. 5. It is also assumed that the process of calculating "$CO_2$ emission in operation" is defined as the following equation (A), and the judgment standard is as shown in (B).

$$\text{Equation (A): } CO_2 \text{ emission in operation} = ((\text{power consumption in a}$$

$$\text{normal mode}) \times (\text{a ratio of time in which a normal mode is selected}) + (\text{power}$$

$$\text{consumption in a maximum mode}) \times (\text{a ratio of time in which a maximum mode is}$$

$$\text{selected}) + (\text{power consumption in a stand-by mode}) \times (\text{a ratio of time in which a}$$

$$\text{stand-by mode is selected})) \div 1000 \times (\text{an estimated number of operation hours per}$$

$$\text{a day}) \times (\text{an estimated number of operation days per a year}) \times (\text{an estimated}$$

$$\text{number of operation years}) \times 0.36$$

   (B) judgment standard:

$CO_2$ emission < 200 kg Rank A
$CO_2$ emission $\geqq$ 200 kg Rank B

In the equation (A), "0.36" is the number of kilograms of $CO_2$ emission generated when a power of 1 kWh is produced.

Receiving the equation (A) and the judgment standard (B), the environmental information manufacturer 12 carries out the step S45.

In step S45, the environmental information manufacturer 12 selects an information necessary for accomplishing an operation in accordance with the equation (A), among the primitive information about the product P received in step S41. In this example, the following information is selected.

Power consumption in a normal mode: 49 W
Power consumption in a maximum mode: 69 W
Power consumption in a stand-by mode: 30 W
Ratio of time in which a normal mode is selected: 0.08
Ratio of time in which a maximum mode is selected: 0.52
Ratio of time in which a stand-by mode is selected: 0.40
Estimated number of operation hours per a day: 7 hours
Estimated number of operation days per a year: 247 days
Estimated number of operation years: 5 years

Then, the figures listed above are introduced into the equation (A) to calculate $CO_2$ emission in operation as follows.

$CO_2$ emission in operation = $(49 \times 0.08 + 69 \times 0.52 + 30 \times 0.40) \div 1000 \times 7 \times 247 \times 5 \times 0.36 = 161$ kg

Then, the environmental information manufacturer 12 judges the thus calculated $CO_2$ emission of the product P, based on the judgment standard received in step S43. Since the calculated $CO_2$ emission, 161 kg, is smaller than 200 kg, the calculated $CO_2$ emission is judged as a rank A.

Then, the environmental information manufacturer 12 calculates values of other environmental information items of the product P, and judges those values, and then, calculates values of environmental information items of other products and judges those values. Then, the environmental information manufacturer 12 makes an environmental information including those values and judgment.

Hereinbelow is explained an example of exhibiting an environmental information to the client computer 3.

On receipt of a request to exhibit an environmental information, from the client computer 3, the environmental information exhibitor 14 transmits an environmental information of each of products, which have been manufactured by the environmental information manufacturer 12 in the above-mentioned manner, to the client computer 3 through the network 2.

The environmental information is received at the communicator 31, and is displayed at the display unit 34.

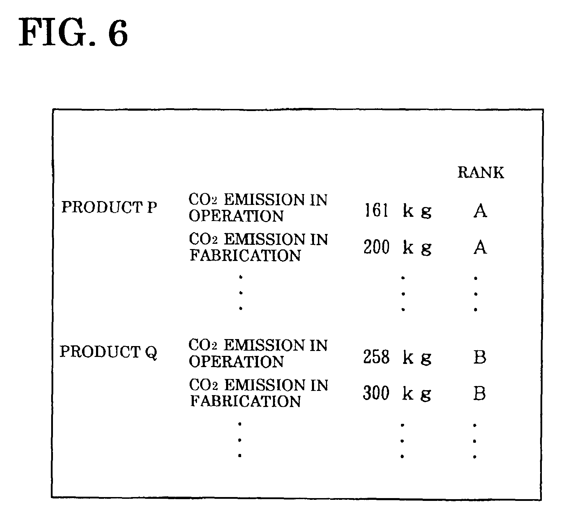

Fig. 6 illustrates an example of exhibition of an environmental information. In Fig. 6, the values and judgment in environmental information items with respect to products P and Q are exhibited.

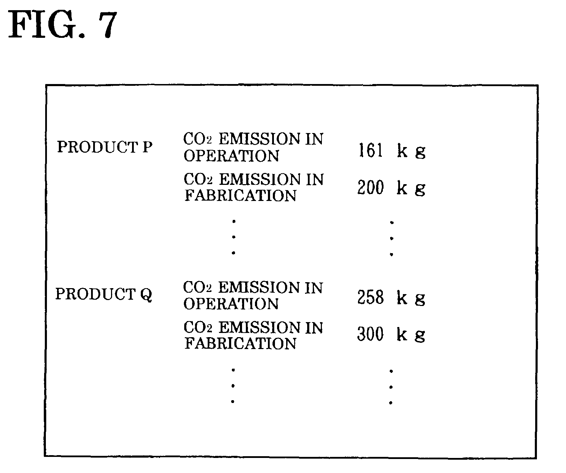

Fig. 7 illustrates another example of exhibition of an environmental information. In Fig. 7, only the values in environmental information items with respect to products P and Q are exhibited.

If only the values in environmental information items are to be exhibited, as illustrated in Fig. 7, it is not necessary for the calculation rule table 13 to store a judgment standard, and it is not necessary to judge a calculated value, based on a judgment standard, in step S45 in Fig. 5.

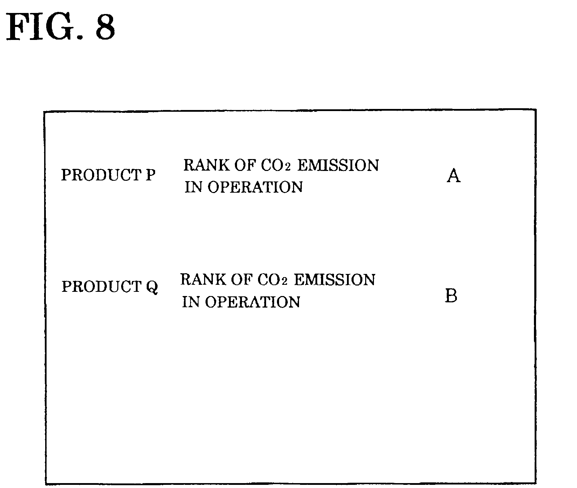

Fig. 8 illustrates still another example of exhibition of an environmental information. In Fig. 8, only the judgment or rank in environmental information items with respect to products P and Q are exhibited. [Second Embodiment]

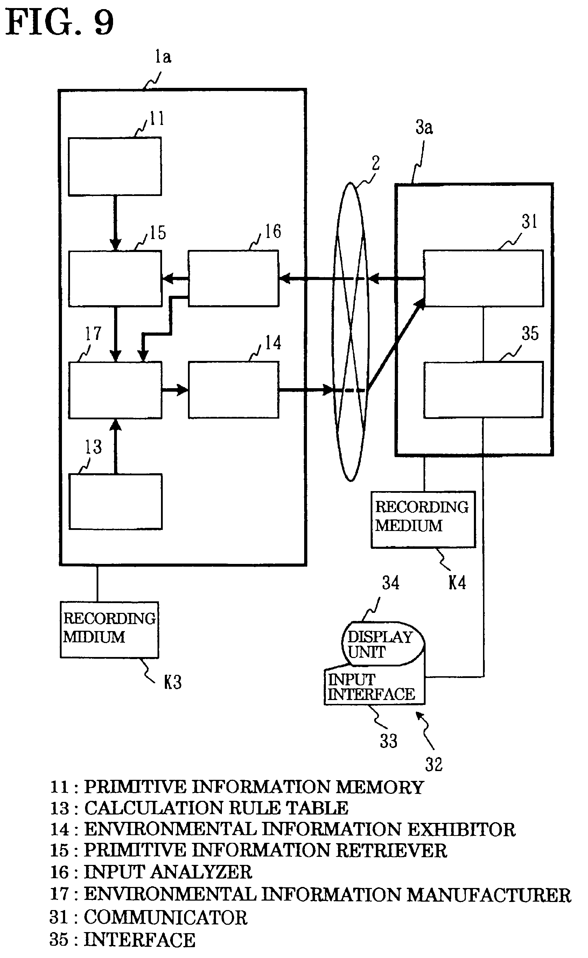

Fig. 9 illustrates an environmental information exhibiting system in accordance with the second embodiment of the first embodiment.

The environmental information exhibiting system is comprised of an environmental information server la through which a product manufacturer exhibits an environmental information, a client computer 3a through which an environmental information reader reads an environmental information, and a network 2 through which the environmental information server la and the client computer 3a are connected to each other.

The environmental information server la is designed to include a primitive information memory 11, a primitive information retriever 15, an input analyzer 16, an environmental information manufacturer 17, a calculation rule table 13, an environmental information exhibitor 14, and a recording medium K3.

The primitive information memory 11, the calculation rule table 13 and the environmental information exhibitor 14 have the same structure as those illustrated in Fig. 2.

The input analyzer 16 analyzes a request to exhibit an environmental information, transmitted from the client computer 3a.

The primitive information retriever 15 retrieves primitive information stored in the primitive information memory 11, based on a result of analysis carried out by the input analyzer 16.

The environmental information manufacturer 17 makes an environmental information, based on a primitive information retrieved by the primitive information retriever 15, the result of analysis carried out by the input analyzer 16, and the calculation rule table 13.

The recording medium K1 is comprised of, for instance, a magnetic disc, a semiconductor memory, or a magnetic tape, and stores therein a program for operating a computer as the environmental information server la. The program is read out by a computer, and controls an operation of the computer. As a result, the above-mentioned primitive information retriever 15, the input analyzer 16, the environmental information manufacturer 17, the calculation rule table 13, and the environmental information exhibitor 14 are realized in the computer.

The client computer 3a includes a communicator 31, an interface 35, an input/output unit 32, and a recording medium K4. The input/output unit 32 is comprised of an input interface 33 and a display unit 34.

The interface 35 displays an image plane on the display unit 34. A client computer user inputs data to designate an environmental information to be exhibited, through the image plane. The interface 35 displays an environmental information received through the communicator 31, at the display unit 34.

The communicator 301 transmits a request to exhibit an environmental information, input through the image plane of the display unit 34 by a client computer user, to the environmental information server la through the network 2. The transmitted request includes data input by a client computer user to designate an environmental information to be exhibited. The communicator 31 further receives an environmental information from the environmental information server 1a through the network 2, and displays the thus received environmental information on the display unit 34.

The recording medium K4 is comprised of, for instance, a magnetic disc, a semiconductor memory, or a magnetic tape, and stores therein a program for operating the client computer 3. The program is read out by the client computer 3a, and controls an operation of the client computer 3a. As a result, the communicator 31 and the interface 35 are realized in the client computer 3a.

Hereinbelow is explained an operation of the environmental information exhibiting system in accordance with the second embodiment.

When an environmental information reader or a client computer user is going to read an environmental information, he/she inputs a request to make a connection with the environmental information server la, through the input/output interface 33. This request is transmitted to the environmental information server 1a through the network 2.

On receipt of the request, the environmental information exhibitor 14 transmits data to the client computer 3a for displaying an image plane at the display unit 34. The client computer user inputs designation data through the image plane, as mentioned later.

The data is received at the communicator 31, and then, displayed at the display unit 34.

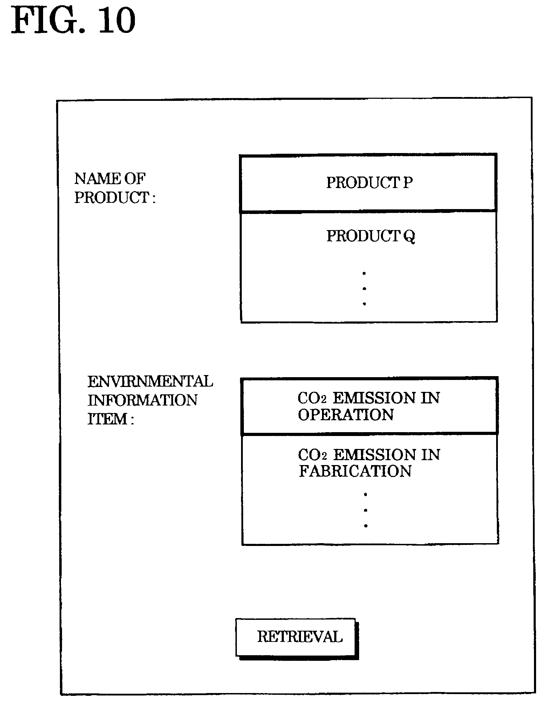

Fig. 10 illustrates an example of an image plane displayed at the display unit 34. A list of products, a list of environmental information items, and a retrieval button are exhibited.

The client computer user selects an environmental information in the lists, and clicks the retrieval button.

For instance, it is assumed that the client computer user selects a product named P among the listed products and $CO_2$ emission in operation among the listed environmental information items. Then, the interface 35 transmits a request to exhibit an environmental information including the product P and $CO_2$ emission in operation, to the environmental information server la through the communicator 31 and the network 2.

The input analyzer 16 notifies the name P of the product included in the request, of the primitive information retriever 15, and further notifies the environmental information item, $CO_2$ emission in operation, included in the request, of the environmental information manufacturer 17.

The primitive information retriever 15 retrieves a primitive information stored in the primitive information memory 11 in association with the name P of the product notified from the input analyzer 16, and transmits the thus retrieved primitive information to the environmental information manufacturer 17.

On receipt of "$CO_2$ emission in operation" as an environmental information item from the input analyzer 16, the environmental information manufacturer 17 reads out a calculation process and a judgment standard stored in the calculation rule table 13 in association with the environmental information item "$CO_2$ emission in operation".

Then, the environmental information manufacturer 17 calculates $CO_2$ emission in operation of the product P, based on the primitive information provided from the primitive information retriever 15 and the calculation process read out of the calculation rule table 13, and judges the thus calculated $CO_2$ emission by comparing to the judgment standard provided from the calculation rule table 13. Then, the environmental information manufacturer 17 manufactures an environmental information including the calculated $CO_2$ emission and the judgment.

The thus manufactured environmental information is transmitted to the client computer 3a through the environmental information exhibitor 14.

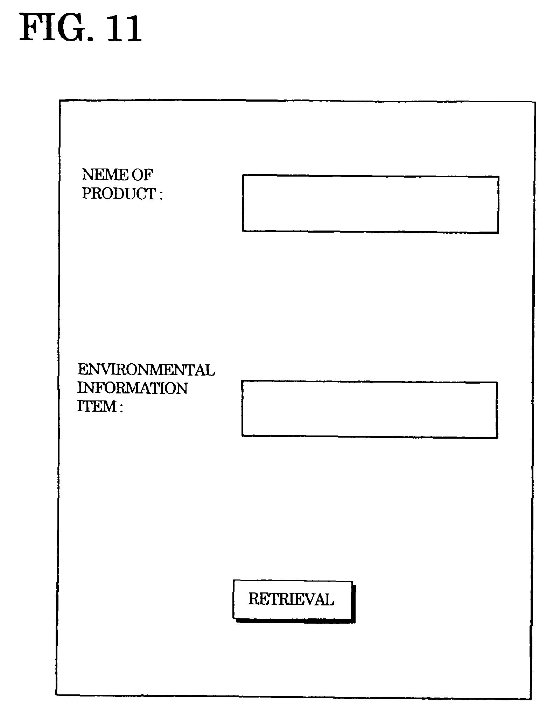

Fig. 11 illustrates another example of an image plane displayed at the display unit 34. A window to which a name of a product is to be input, a window to which an environmental information item is to be input, and a retrieval button are exhibited.

A client computer user inputs a name of a product and an environmental information item to the windows to thereby designate an environmental information to be exhibited. After inputting those data, a client computer user clicks the retrieval button. Thus, a request to exhibit an environmental information identified with a name of a product and an environmental information item is transmitted to the environmental information server 1a.

In accordance with the second embodiment, a request to exhibit an environmental information identified by a client computer user with a name of a product and an environmental information item is transmitted to the environmental information server la from the client computer 3a. On receipt of the request, the environmental information server 1a manufactures an environmental information identified with the name of a product and the environmental information item, and transmits the thus manufactured environmental information to the client computer 3a. Accordingly, a client computer user can make access to his/her desired environmental information.

[Third Embodiment]

The environmental information exhibiting system in accordance with the third embodiment has the same structure as that of the environmental information exhibiting system in accordance with the second embodiment, illustrated in Fig. 9, but operates in a different manner from that of the environmental information exhibiting system in accordance with the second embodiment.

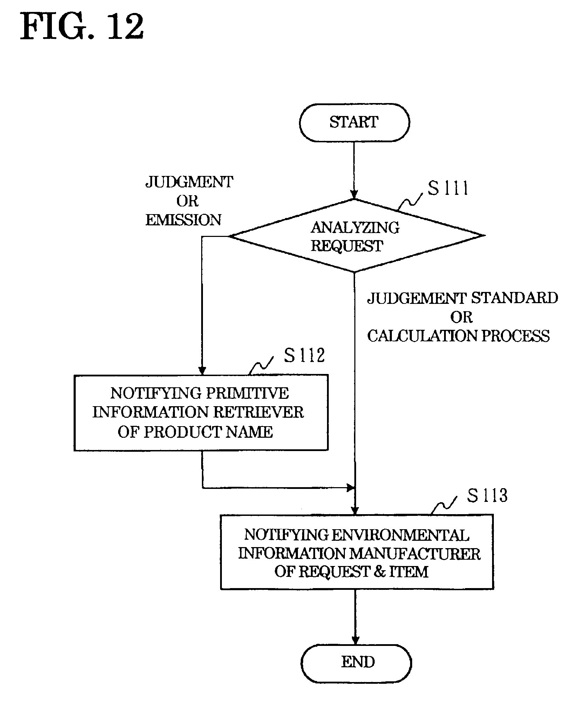

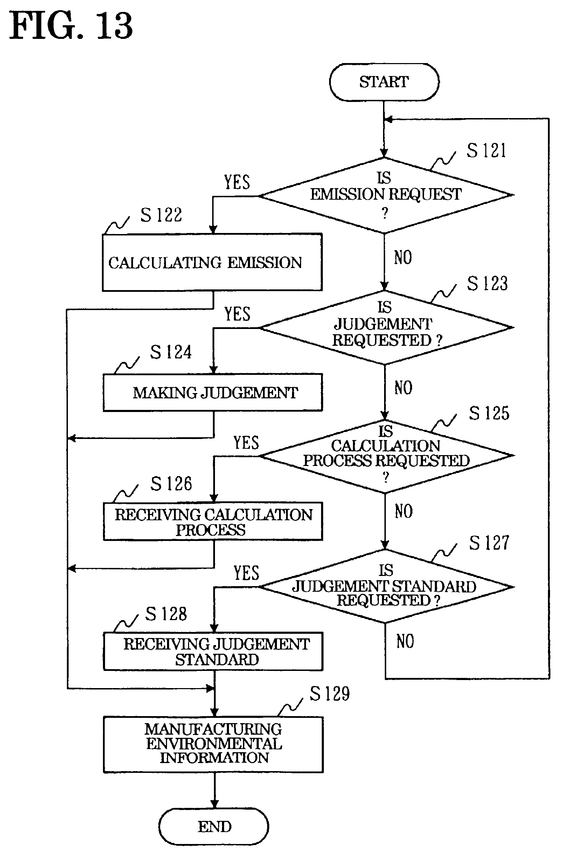

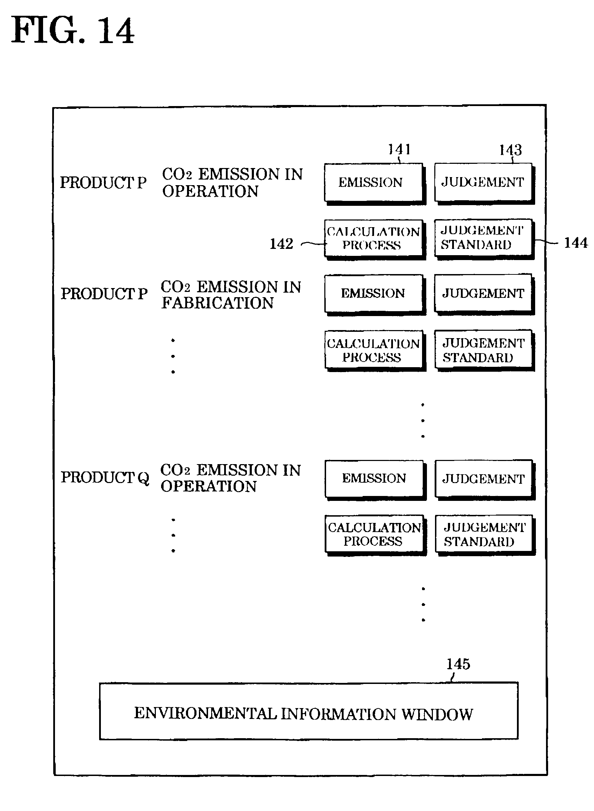

Specifically, the input analyzer 16 operates in such a manner as illustrated in Fig 12, the environmental information manufacturer 17 operates in such a manner as illustrated in Fig. 13, and the display unit 34 operates in such a manner as illustrated in Fig. 14.

When a client computer user is going to read an environmental information, he/she inputs a request to make a connection with the environmental information server la, through the input/output interface 33. This request is transmitted to the environmental information server la through the network 2.

On receipt of the request, the environmental information exhibitor 14 transmits data to the client computer 3a for displaying an image plane at the display unit 34.

The data is received at the communicator 31. The interface 35 displays such an image plane as illustrated in Fig. 14, at the display unit 34.

With reference to Fig. 14, an emission exhibition button 141, a calculation process exhibition button 142, a judgment exhibition button 143, and a judgment standard exhibition button 144 are arranged in the image plane in association with a name of a product and an environmental information item. At the bottom of the image plane is arranged a window 145 in which an environmental information is to be exhibited.

A client computer user selects an environmental information which he/she wants to read, in the image plane.

For instance, if a client computer user wants to know $CO_2$ emission in operation of a product P, what he/she has to do is to click the emission exhibition button 141 associated with the product P and the environmental information item "$CO_2$ emission in operation". If a client computer user wants to know a judgment to $CO_2$ emission in fabrication of a product P, what he/she has to do is to click the judgment exhibition button 143 associated with the product P and the environmental information item "$CO_2$ emission in fabrication". As an alternative, if a client computer user wants to know a calculation process for calculating a certain environmental information item, what he/she has to do is to click the calculation process exhibition button 142 associated with the environmental information item. If a client computer user wants to know a judgment standard in a certain environmental information item, what he/she has to do is to click the judgment standard exhibition button 144 associated with the environmental information item.

When the emission exhibition button 141 is clicked, the interface 35 transmits a request to exhibit an emission, which identifies a name of a product and an environmental information item associated with the clicked button. When the judgment exhibition button 143 is clicked, the interface 35 transmits a request to exhibit judgment, which identifies a name of a product and an environmental information item associated with the clicked button. When the calculation process exhibition button 142 is clicked, the interface 35 transmits a request to exhibit a calculation process, which identifies an environmental information item associated with the clicked button. When the judgment standard exhibition button 144 is clicked, the interface 35 transmits a request to exhibit a judgment standard, which identifies an environmental information item associated with the clicked button.

The communicator 31 transmits the thus made request to the environmental information server la through the network 2.

The input analyzer 16 analyzes the request transmitted from the client computer 3a, in step S111 in Fig. 12.

When the request includes a request to exhibit judgment or emission, the input analyzer 16 notifies the primitive information retriever 15 of a product name included in the request, in step S112, and further notifies the environmental information manufacturer 17 of what is requested to exhibit and the requested environmental information item, in step S113.

When the request includes a request to exhibit a judgment standard or a calculation process, the input analyzer 16 notifies the environmental information manufacturer 17 of what is requested to exhibit and the requested environmental information item, in step S113.

The primitive information retriever 15 retrieves a primitive information among primitive information stored in the primitive information memory 11, based on the product name notified from the input analyzer 16, and transmits the thus retrieved primitive information to the environmental information manufacturer 17.

When the environmental information manufacturer 17 is notified from the input analyzer 16 that the request includes a request to exhibit an emission, and notified further of the environmental information item in which an emission is to be calculated (YES in step S121), the environmental information manufacturer 17 calculates an emission, in step S122, based on a calculation process stored in the calculation rule table 13 and the primitive information retrieved by the primitive information retriever 15. Then, the environmental information manufacturer 17 manufactures an environmental information including the thus calculated emission, in step S129.

When the environmental information manufacturer 17 is notified from the input analyzer 16 that the request includes a request to exhibit judgment, and notified further of the environmental information item in which judgment to be made (YES in step S123), the environmental information manufacturer 17 makes judgment, in step S124, based on a calculation process and a judgment standard stored in the calculation rule table 13 and the primitive information retrieved by the primitive information retriever 15. Then, the environmental information manufacturer 17 manufactures an environmental information including the thus made judgment in step S129.

When the environmental information manufacturer 17 is notified from the input analyzer 16 that the request includes a request to exhibit a calculation process, and notified further of the environmental information item in which a calculation process is to be exhibited (YES in step S125), the environmental information manufacturer 17 receives the calculation process stored in the calculation rule table 13 in association with the environmental information item, in step S126. Then, the environmental information manufacturer 17 manufactures an environmental information including the calculation process, in step S129.

When the environmental information manufacturer 17 is notified from the input analyzer 16 that the request includes a request to exhibit a judgment standard, and notified further of the environmental information item in which a judgment standard is to be exhibited (YES in step S127), the environmental information manufacturer 17 receives the judgment standard stored in the calculation rule table 13 in association with the environmental information item, in step S128. Then, the environmental information manufacturer 17 manufactures an environmental information including the judgment standard, in step S129.

The environmental information exhibitor 14 transmits the thus made environmental information to the client computer 3a through the network 2.

The environmental information is received at the communicator 31, and is displayed at the window 145 (see Fig. 14) in the image plane by the interface 35.

Though not explained in the above-mentioned second and third embodiments, if the environmental information manufacturer 17 could not receive a primitive information necessary for manufacturing an environmental information which a client computer user wants to read, from the primitive information memory 11, the environmental information manufacturer 17 may calculate an appropriate value, for instance, of an emission, based on data stored in advance in the primitive information memory 11, and may make judgment to such an appropriate value.

When an environmental information including the above-mentioned approximate value is to be transmitted to a client computer user, it is preferable that the environmental information includes a note indicating that the included value is an approximate value.

In addition, if the environmental information server 1a is designed to have a function of notifying a primitive information manager that the environmental information manufacturer 17 cannot receive a necessary primitive information from the primitive information memory 11, the primitive information manager could make a response to a request of a client computer user.

[Fourth Embodiment]

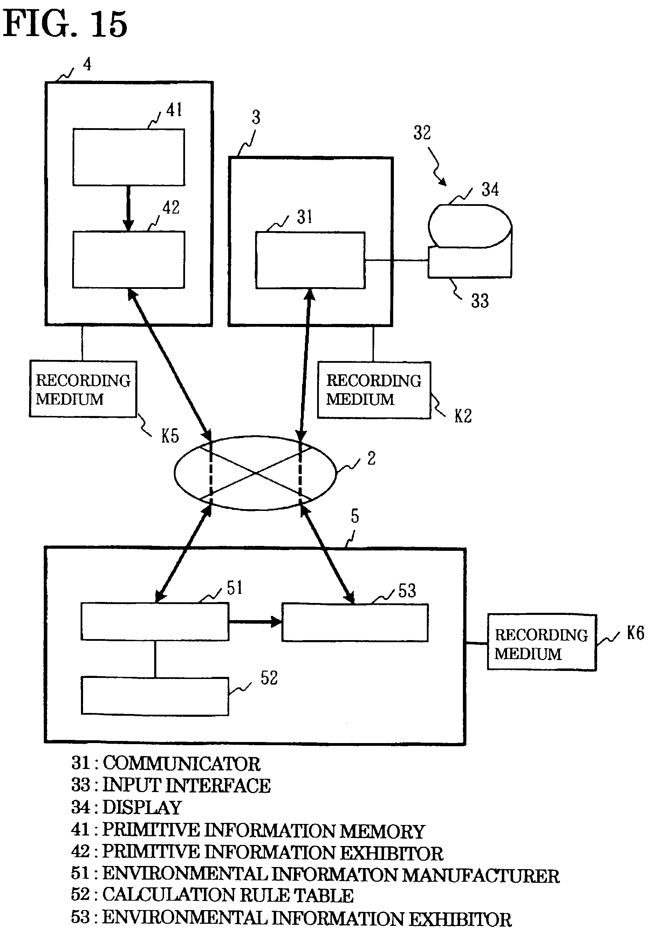

Fig. 15 illustrates an environmental information exhibiting system in accordance with the fourth embodiment of the first embodiment.

The environmental information exhibiting system is comprised of a primitive information server 4 through which a product manufacturer exhibits a primitive information, an environmental information server 5 in which an environmental information is manufactured based on a primitive information, a client computer 3 through which an environmental information reader reads an environmental information, and a network 2 through which the primitive information server 4, the environmental information server 5 and the client computer 3 are connected to one another.

The primitive information server 4 is designed to include a primitive information memory 41 storing a primitive information relating to one or more product, a primitive information exhibitor 42 exhibiting a primitive information stored in the primitive information memory 41, to the environmental information server 5, and a recording medium K5.

The recording medium K5 is comprised of, for instance, a magnetic disc, a semiconductor memory, or a magnetic tape, and stores therein a program for operating a computer as the primitive information server 4. The program is read out by a computer, and controls an operation of the computer. As a result, the above-mentioned primitive information exhibitor 42 is realized in the computer.

The environmental information server 5 is comprised of an environmental information manufacturer 51 which manufactures an environmental information, based on a primitive information transmitted from the primitive information exhibitor 42 through the network 2, a calculation rule table 52 having the same structure as that of the calculation rule table 13 illustrated in Fig. 2, an environmental information exhibitor 53 exhibiting an environmental information manufactured by the environmental information manufacturer 51, to the client computer 3 through the network 2, and a recording medium K6.

The recording medium K6 is comprised of, for instance, a magnetic disc, a semiconductor memory, or a magnetic tape, and stores therein a program for operating a computer as the environmental information server 5. The program is read out by a computer, and controls an operation of the computer. As a result, the environmental information manufacturer 51, the calculation rule table 52, and the environmental information exhibitor 53 are realized in the computer.

The client computer 3 has the same structure as that of the client computer 3 illustrated in Fig. 2.

Hereinbelow is explained an operation of the environmental information exhibiting system in accordance with the fourth embodiment.

A product manufacturer stores a primitive information of products in the primitive information memory 41.

On receipt of a request to exhibit a primitive information, from the environmental information manufacturer 51 through the network 2, the primitive information exhibitor 42 transmits a primitive information stored in the primitive information memory 41, to the environmental information server 5 through the network 2.

Receiving a primitive information from the primitive information exhibitor 42, the environmental information manufacturer 51 manufactures an environmental information by means of the calculation rule table 52.

When a client computer user wants to read an environmental information, the client computer user inputs a request to exhibit an environmental information, through the input interface 33. The request is transmitted to the environmental information server 5 through the communicator 31 and the network 2.

In response, the environmental information exhibitor 53 transmits an environmental information manufactured by the environmental information manufacturer 51, to the client computer 3 through the network 2.

The environmental information is received at the communicator 31, and then, is displayed at the display unit 34.

In the fourth embodiment, the primitive information server 4 exhibiting a primitive information is independent of the environmental information server 5 exhibiting an environmental information. Accordingly, it is possible to manage the primitive information server 4 and the environmental information server 5 independently of each other. For instance, a primitive information can be added to the primitive information server 4, or a primitive information stored in the primitive information server 4 may be updated independently of the environmental information server 5. As an alternative, a process for calculating a value of an environmental information item may be changed into a new one in the environmental information server 5 independently of the primitive information server 4.

Though Fig. 15 illustrates only one environmental information server 5, the environmental information system may be designed to include a plurality of environmental information servers, in which case, it is preferable that the primitive information exhibitor 42 has a function of identifying a certain environmental information server among a plurality of environmental information servers. This ensures that only the environmental information manufacturer 51 in the certain environmental information server can receive a primitive information from the primitive information exhibitor 42, and prevents unintentional direct exhibition of a primitive information to an environmental information server.

Similarly, though Fig. 15 illustrates only one primitive information server 4, the environmental information system may be designed to include a plurality of primitive information servers.

[Fifth Embodiment]

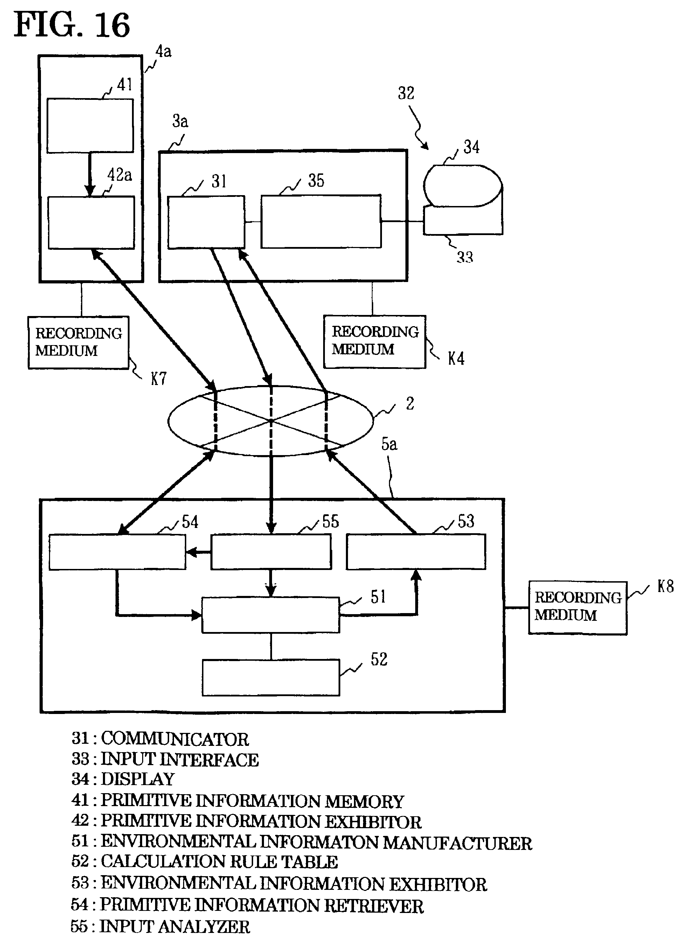

Fig. 16 illustrates an environmental information exhibiting system in accordance with the fourth embodiment of the fifth embodiment.

The environmental information exhibiting system is comprised of a primitive information server 4a through which a product manufacturer exhibits a primitive information, an environmental information server 5a in which an environmental information is manufactured based on a primitive information, a client computer 3a through which a client computer user reads an environmental information, and a network 2 through which the primitive information server 4a, the environmental information server 5a and the client computer 3a are connected to one another.

The client computer 3a has the same structure as that of the client computer 3a illustrated in Fig. 9.

The primitive information server 4a is designed to include a primitive information memory 41, a primitive information exhibitor 42a, and a recording medium K7.

The information memory 41 stores a primitive information relating to one or more product.

The primitive information exhibitor 42a retrieves a primitive information stored in the primitive information memory 41 to thereby search a primitive information identified by a request to exhibit a primitive information, transmitted from the environmental information server 5a, and transmits the thus searched primitive information to the environmental information server 5a.

The recording medium K7 is comprised of, for instance, a magnetic disc, a semiconductor memory, or a magnetic tape, and stores therein a program for operating a computer as the primitive information server 4a. The program is read out by a computer, and controls an operation of the computer. As a result, the above-mentioned primitive information exhibitor 42a is realized in the computer.

The environmental information server 5a is comprised of an environmental information manufacturer 51, a calculation rule table 52, an environmental information exhibitor 53, a primitive information retriever 54, an input analyzer 55, and a recording medium K8.

The input analyzer 55, the environmental information exhibitor 53, the environmental information manufacturer 51 and the calculation rule table 52 have the same structure as that of the input analyzer 16, the environmental information exhibitor 14, the environmental information manufacturer 17 and the calculation rule table 13 illustrated in Fig. 9, respectively.

The primitive information retriever 54, on receipt of a name of a product from the input analyzer 55, transmits a request to exhibit a primitive information, including the name of a product, to the primitive information server 4a, and transmits a primitive information transmitted from the primitive information server 4a, to the environmental information manufacturer 51.

The recording medium K8 is comprised of, for instance, a magnetic disc, a semiconductor memory, or a magnetic tape, and stores therein a program for operating a computer as the environmental information server 5a. The program is read out by a computer, and controls an operation of the computer. As a result, the above-mentioned environmental information manufacturer 51, calculation rule table 52, environmental information exhibitor 53, primitive information retriever 54 and input analyzer 55 are realized in the computer.

Hereinbelow is explained an operation of the environmental information exhibiting system in accordance with the fifth embodiment.

A product manufacturer stores a primitive information of products in the primitive information memory 41.

A client computer user inputs data to identify an environmental information he/she wants to read, through such an image plane as illustrated in Fig. 10, 11 or 14.

The interface 35 manufactures a request to exhibit an environmental information, including data input by a client computer user through the image plane. The request is transmitted to the environmental information server 5a through the communicator 31 and the network 2.

The input analyzer 55 analyzes the request transmitted from the client computer 3a.

The primitive information retriever 54 transmits a request to exhibit a primitive information, including a name of a requested product, to the primitive information server 4a, based on a result of analysis carried out by the input analyzer 55.

The primitive information exhibitor 42a retrieves a primitive information associated with a name of a product included in the request, among primitive information stored in the primitive information memory 41, and transmits the thus retrieved primitive information to the primitive information retriever 54. The primitive information retriever 54 transmits the thus received primitive information to the environmental information manufacturer 51.

The environmental information manufacturer 51 manufactures an environmental information, based on the primitive information transmitted from the primitive information retriever 54, the result of analysis carried out by the input analyzer 55, and the calculation rule table 52.

The environmental information exhibitor 53 transmits the thus manufactured environmental information to the client computer 3a through the network 2.

The environmental information is received at the communicator 31, and then, is displayed at the display unit 34.

The above-mentioned environmental information server may be accomplished as a program including various commands, and be presented through a recording medium readable by a computer.

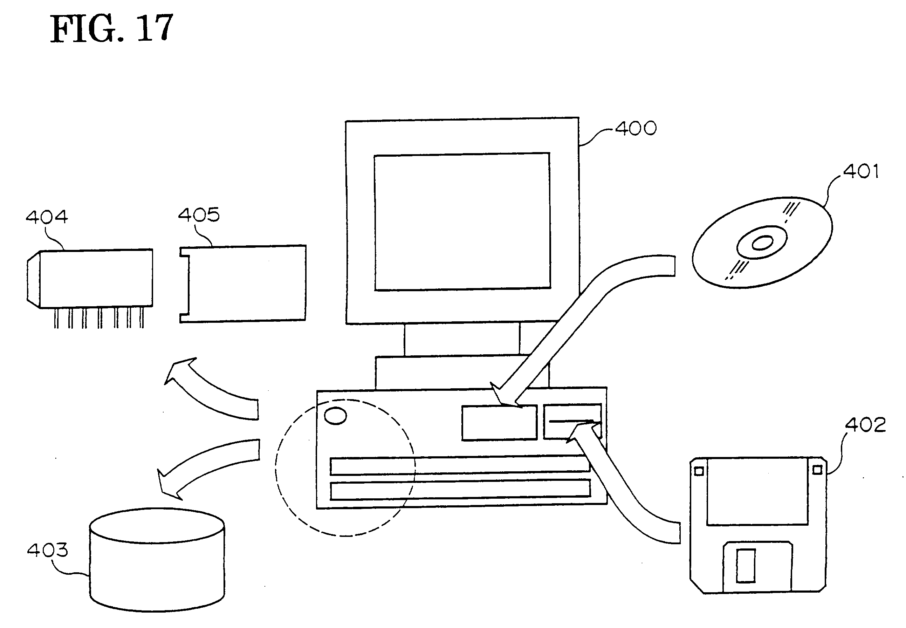

In the specification, the term "recording medium" means any medium which can record data therein. Examples of a recording medium are illustrated in Fig. 17.

The term "recording medium" includes, for instance, a disk-shaped recorder 401 such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk 402, a memory chip 404 such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM 405 such as a compact flush card, a hard disk 403, and any other suitable means for storing a program therein.

A recording medium storing a program for accomplishing the above-mentioned environmental information server may be accomplished by programming functions of the above-mentioned server with a programming language readable by a computer, and recording the program in a recording medium such as mentioned above.

A hard disc equipped in a server may be employed as a recording medium. It is also possible to accomplish the recording medium in accordance with the present invention by storing the above-mentioned computer program in such a recording medium as mentioned above, and reading the computer program by other computers through a network.

As a computer 400, there may be used a personal computer, a desk-top type computer, a note-book type computer, a mobile computer, a lap-top type computer, a pocket computer, a server computer, a client computer, a workstation, a host computer, a commercially available computer, and electronic exchanger, for instance.

**Claims**

1. An environmental information exhibiting system comprising:

    (a) a primitive information memory (11, 41) storing a primitive information relating to at least one product;
    (b) an environmental information manufacturer (12, 17, 51) manufacturing an environmental information, based on the primitive information stored in the primitive information memory (11, 41); and
    (c) an environmental information exhibitor (14, 53) exhibiting the environmental information manufactured by the environmental information manufacturer (12, 17, 51), through a network (2).

2. The environmental information exhibiting system as set forth in claim 1, further comprising:

    an input analyzer (16, 55) analyzing a request transmitted from a client terminal (3, 3a) through a network (2); and
    a primitive information retriever (15, 54) retrieving the primitive information stored in the primitive information memory (11, 41), based on a result of analysis carried out by the input analyzer (16, 55),
    the environmental information manufacturer (12, 17, 51) manufacturing an environmental information, based on both a primitive information retrieved by the primitive information retriever (15, 54), and the result of analysis carried out by the input analyzer (16, 55).

3. The environmental information exhibiting system as set forth in claim 2, wherein the request includes at least one name of a product and at least one name of an environmental information item,

the input analyzer (16, 55) having a function of extracting the name of a product and the name of an environmental information item, out of the request, the primitive information retriever (15, 54) having a function of retrieving a primitive information associated with the name of a product extracted by the input analyzer (16, 55), out of the primitive information memory (11, 41),
the environmental information manufacturer (12, 17, 51) having a function of manufacturing an environmental information about an environmental information item extracted by the input analyzer (16, 55), based on a primitive information associated with the name of a product, retrieved by the primitive information retriever (15, 54).

4. The environmental information exhibiting system as set forth in claim 3, further comprising a calculation rule table (13, 52) storing rules in accordance with each of which each of environmental information items is calculated,
the environmental information manufacturer (12, 17, 51) calculating a value of an environmental information item extracted by the input analyzer (16, 55), and manufacturing an environmental information including the thus calculated value, in accordance with both a primitive information retrieved by the primitive information retriever (15, 54), and a rule stored in the calculation rule table (13, 52) and extracted by the input analyzer (16, 55) as an association of the name of an environmental information item.

5. The environmental information exhibiting system as set forth in claim 4, wherein the calculation rule table (13, 52) stores a judgment standard to which a value of an environmental information item calculated by each of the rules is compared for judgment,
the environmental information manufacturer (12, 17, 51) judging a calculated value of an environmental information item, based on the judgment standard associated with a name of an environmental information item extracted by the input analyzer (16, 55), and manufacturing an environmental information including the thus judged value.

6. The environmental information exhibiting system as set forth in claim 2, wherein the environmental information manufacturer (12, 17, 51) calculates an approximate value of a requested environmental information item, based on a predetermined standard value, if the environmental information manufacturer (12, 17, 51) cannot receive the primitive information from the primitive information memory (11, 41).

7. The environmental information exhibiting system as set forth in claim 6, wherein the environmental information manufacturer (12, 17, 51) includes an indication that the calculated value is an approximate value, in the environmental information.

8. An environmental information exhibiting system comprising:

(a) an environmental information server (1, 1a, 5, 5a); and
(b) at least one client terminal (3, 3a) connected to the environmental information server (1, 1a, 5, 5a) through a network (2),

the client terminal (3, 3a) including:

(b1) an interface (35) receiving data to identify an environmental information which a client terminal (3, 3a) user requests the environmental information server (1, 1a, 5, 5a) to exhibit; and
(b2) a communicator (31) transmitting a request made by the interface (35) to the environmental information server (1, 1a, 5, 5a) through the network (2), and receiving an environmental information transmitted from the environmental information server (1, 1a, 5, 5a),

the environmental information server (1, 1a, 5, 5a) including:

(a1) a primitive information memory (11, 41) storing a primitive information relating at least one product;
(a2) a primitive information retriever (15, 54) retrieving the primitive information stored in the primitive information memory (11, 41), based on a name of a product included in the request transmitted from the client terminal (3, 3a) through the network (2);
(a3) a calculation rule table (13, 52) storing rules and judgment standards in each of environmental information items, a value of each of environmental information items being calculated in accordance with each of the rules, and a calculated value being compared to each of the judgment standards for judgment;

(a4) an environmental information manufacturer (12, 17, 51) manufacturing an environmental information in accordance with the request transmitted from the client terminal (3, 3a); and

(a5) an environmental information transmitter (14, 53) transmitting the environmental information manufactured by the environmental information manufacturer (12, 17, 51), to the client terminal (3, 3a) through the network (2).

9. The environmental information exhibiting system as set forth in claim 8, wherein the environmental information server (1, la, 5, 5a) further includes an input analyzer (16, 55) analyzing a request transmitted from the client terminal (3, 3a) through the network (2).

10. The environmental information exhibiting system as set forth in claim 8, wherein, if the request includes exhibition of a name of a product, a name of an environmental information item, and a value of the environmental information item, the environmental information manufacturer (12, 17, 51) calculates a value of a requested environmental information item, based on a primitive information retrieved by the primitive information retriever (15, 54), the rules stored in the calculation rule table (13, 52), the name of a requested product, and the name of a requested environmental information item, and manufactures an environmental information including the thus calculated value.

11. The environmental information exhibiting system as set forth in claim 8, wherein, if the request includes exhibition of a name of a product, a name of an environmental information item, and a judgement on a value of the environmental information item, the environmental information manufacturer (12, 17, 51) calculates and makes judgement on a value of a requested environmental information item, based on a primitive information retrieved by the primitive information retriever (15, 54), the rules stored in the calculation rule table (13, 52), the name of a requested product, and the name of a requested environmental information item, and manufactures an environmental information including the thus made judgement.

12. The environmental information exhibiting system as set forth in claim 8, wherein, if the request includes exhibition of a process by which a value of environmental information item is calculated, and a name of an environmental information item, the environmental information manufacturer (12, 17, 51) manufactures an environmental information including the process associated with the environmental information item, stored in the calculation rule table (13, 52).

13. The environmental information exhibiting system as set forth in claim 8, wherein, if the request includes exhibition of a judgment standard based on which a value of environmental information item is judged, and a name of an environmental information item, the environmental information manufacturer (12, 17, 51) manufactures an environmental information including the judgment standard associated with the environmental information item, stored in the calculation rule table (13, 52).

14. The environmental information exhibiting system as set forth in claim 8, wherein the environmental information manufacturer (12, 17.51) calculates an approximate value of a requested environmental information item, based on a predetermined standard value, if the environmental information manufacturer (12, 17, 51) cannot receive the primitive information from the primitive information memory (11, 41).

15. The environmental information exhibiting system as set forth in claim 14, wherein the environmental information manufacturer (12, 17, 51) includes an indication that the calculated value is an approximate value, in the environmental information.

16. An environmental information exhibiting system comprising:

(a) at least one primitive information server (4, 4a); and
(b) at least one environmental information server (1, 1a, 5, 5a) connected to the primitive information server (4, 4a) through a network (2),

the primitive information server (4, 4a) including:

(a1) a primitive information memory (11, 41) storing a primitive information relating at least one product; and
(a2) a primitive information exhibitor (42, 42a) exhibiting a primitive information stored in the primitive infor-

mation memory (11, 41), to the environmental information server (1, 1a, 5, 5a) through the network (2),

the environmental information server (1, 1a, 5, 5a) including:

(b1) an environmental information manufacturer (12, 17, 51) manufacturing an environmental information, based on the primitive information exhibited by the primitive information exhibitor (42, 42a) through the network (2); and
(b2) an environmental information exhibitor (14, 53) exhibiting the environmental information manufactured by the environmental information manufacturer (12, 17, 51), to a client terminal (3, 3a) through the network (2).

17. The environmental information exhibiting system as set forth in claim 16. wherein the environmental information server (1, 1a, 5, 5a) further includes:

an input analyzer (16, 55) analyzing a request transmitted from a client terminal (3, 3a) through the network (2); and
a primitive information retriever (15, 54) retrieving a primitive information exhibited by the primitive information exhibitor (42, 42a) through the network (2), based on a result of analysis carried out by the input analyzer (16, 55),
the environmental information manufacturer (12, 17, 51) manufacturing an environmental information, based on both the primitive information retrieved by the primitive information retriever (15, 54) and the result of analysis.

18. The environmental information exhibiting system as set forth in claim 16 or 17, wherein the environmental information server (1, 1a, 5, 5a) further includes a calculation rule table (13, 52) including a rule and a judgment standard, the environmental information manufacturer (12, 17, 51) calculating a value of an environmental information item in accordance with the rule, and judging the thus calculated value in accordance with the judgment standard.

19. The environmental information exhibiting system as set forth in claim 16 or 17, wherein the environmental information exhibiting system includes a plurality of environmental information servers (1, 1a, 5, 5a), and the primitive information exhibitor (42, 42a) has a function of identifying a certain environmental information server (1, 1a, 5, 5a) among the environmental information servers (1, 1a, 5, 5a) so that the primitive information exhibitor (42, 42a) exhibits the primitive information only to the certain environmental information server (1, 1a, 5, 5a).

20. The environmental information exhibiting system as set forth in claim 16 or 17, wherein the environmental information manufacturer (12, 17, 51) calculates an approximate value of a requested environmental information item based on a predetermined standard value, if the environmental information manufacturer (12, 17, 51) cannot receive the primitive information from the primitive information memory (11, 41).

21. The environmental information exhibiting system as set forth in claim 20, wherein the environmental information manufacturer (12, 17, 51) includes an indication that the calculated value is an approximate value, in the environmental information.

22. An environmental information server (1, 1a, 5, 5a) cooperating with at least one client terminal (3, 3a) connected to the environmental information server (1, 1a, 5, 5a) through a network (2), to define an environmental information exhibiting system, the client terminal (3, 3a) including an interface (35) receiving data to identify an environmental information which a client terminal (3, 3a) user requests the environmental information server (1, 1a, 5, 5a) to exhibit, and a communicator (31) transmitting a request made by the interface (35) to the environmental information server (1, 1a, 5, 5a) through the network (2), and receiving an environmental information transmitted from the environmental information server (1, 1a, 5, 5a),
the environmental information server (1, 1a, 5, 5a) comprising:

(a) a primitive information memory (11, 41) storing a primitive information relating at least one product;
(b) a primitive information retriever (15, 54) retrieving the primitive information stored in the primitive information memory (11, 41), based on a name of a product included in the request transmitted from the client terminal (3, 3a) through the network (2);
(c) a calculation rule table (13, 52) storing rules and judgment standards in each of environmental information items, a value of each of environmental information items being calculated in accordance with each of the rules, and a calculated value being compared to each of the judgment standards for judgment;

(d) an environmental information manufacturer (12, 17, 51) manufacturing an environmental information in accordance with the request transmitted from the client terminal (3, 3a); and

(e) an environmental information transmitter (14, 53) transmitting the environmental information manufactured by the environmental information manufacturer (12, 17, 51), to the client terminal (3, 3a) through the network (2).

23. The environmental information server (1, 1a, 5, 5a) as set forth in claim 22, further including an input analyzer (16, 55) analyzing a request transmitted from the client terminal (3, 3a) through the network (2).

24. The environmental information server (1, 1a, 5, 5a) as set forth in claim 22, wherein, if the request includes exhibition of a name of a product, a name of an environmental information item, and a value of the environmental information item, the environmental information manufacturer (12, 17, 51) calculates a value of a requested environmental information item, based on a primitive information retrieved by the primitive information retriever (15, 54), the rules stored in the calculation rule table (13, 52), the name of a requested product, and the name of a requested environmental information item, and manufactures an environmental information including the thus calculated value.

25. The environmental information server (1, 1a, 5, 5a) as set forth in claim 22, wherein, if the request includes exhibition of a name of a product, a name of an environmental information item, and a judgement on a value of the environmental information item, the environmental information manufacturer (12, 17, 51) calculates and makes judgement on a value of a requested environmental information item, based on a primitive information retrieved by the primitive information retriever (15, 54), the rules stored in the calculation rule table (13, 52), the name of a requested product, and the name of a requested environmental information item, and manufactures an environmental information including the thus made judgement.

26. The environmental information server (1, 1a, 5, 5a) as set forth in claim 22, wherein, if the request includes exhibition of a process by which a value of environmental information item is calculated, and a name of an environmental information item, the environmental information manufacturer (12, 17, 51) manufactures an environmental information including the process associated with the environmental information item, stored in the calculation rule table (13, 52).

27. The environmental information server (1, 1a, 5, 5a) as set forth in claim 22, wherein, if the request includes exhibition of a judgment standard based on which a value of environmental information item is judged, and a name of an environmental information item, the environmental information manufacturer (12, 17, 51) manufactures an environmental information including the judgment standard associated with the environmental information item, stored in the calculation rule table (13, 52).

28. The environmental information server (1, 1a, 5, 5a) as set forth in claim 22, wherein the environmental information manufacturer (12, 17, 51) calculates an approximate value of a requested environmental information item, based on a predetermined standard value, if the environmental information manufacturer (12, 17, 51) cannot receive the primitive information from the primitive information memory (11, 41).

29. The environmental information server (1, 1a, 5, 5a) as set forth in claim 28, wherein the environmental information manufacturer (12, 17, 51) includes an indication that the calculated value is an approximate value, in the environmental information.

30. An environmental information server (1, 1a, 5, 5a) cooperating with at least one primitive information server (4, 4a) connected to the environmental information server (1, 1a, 5, 5a) through a network (2), to define an environmental information exhibiting system, the primitive information server (4, 4a) including a primitive information memory (11, 41) storing a primitive information relating at least one product, and a primitive information exhibitor (42, 42a) exhibiting a primitive information stored in the primitive information memory (11, 41), to the environmental information server (1, 1a, 5, 5a) through the network (2),

the environmental information server (1, 1a, 5, 5a) comprising:

(a) an environmental information manufacturer (12, 17, 51) manufacturing an environmental information, based on the primitive information exhibited by the primitive information exhibitor (42, 42a) through the network (2); and

(b) an environmental information exhibitor (14, 53) exhibiting the environmental information manufactured by the environmental information manufacturer (12, 17, 51), to a client terminal (3, 3a) through the network (2).

31. The environmental information server (1, 1a, 5, 5a) as set forth in claim 30, wherein the environmental information server (1, 1a, 5, 5a) further includes:

an input analyzer (16, 55) analyzing a request transmitted from a client terminal (3, 3a) through the network (2); and
a primitive information retriever (15, 54) retrieving a primitive information exhibited by the primitive information exhibitor (42, 42a) through the network (2), based on a result of analysis carried out by the input analyzer (16, 55),
the environmental information manufacturer (12, 17, 51) manufacturing an environmental information, based on both the primitive information retrieved by the primitive information retriever (15, 54) and the result of analysis.

32. The environmental information server (1, 1a, 5, 5a) as set forth in claim 30 or 31, further including a calculation rule table (13, 52) including a rule and a judgment standard,
the environmental information manufacturer (12, 17, 51) calculating a value of an environmental information item in accordance with the rule, and judging the thus calculated value in accordance with the judgment standard.

33. The environmental information server (1, 1a, 5, 5a) as set forth in claim 30 or 31, wherein the environmental information manufacturer (12, 17, 51) calculates an approximate value of a requested environmental information item, based on a predetermined standard value, if the environmental information manufacturer (12, 17, 51) cannot receive the primitive information from the primitive information memory (11, 41).

34. The environmental information server (1, 1a, 5, 5a) as set forth in claim 33, wherein the environmental information manufacturer (12, 17, 51) includes an indication that the calculated value is an approximate value, in the environmental information.

35. A method of exhibiting an environmental information in an environmental information exhibiting system, comprising the steps of:

(a) storing a primitive information relating to at least one product;
(b) manufacturing an environmental information, based on the primitive information stored in the primitive information memory (11, 41); and
(c) exhibiting the environmental information through a network (2).

36. The method as set forth in claim 35, further comprising the step of calculating an approximate value of a requested environmental information item. based on a predetermined standard value, if the primitive information is not available.

37. The method as set forth in claim 36, further comprising the step of including an indication that the calculated value is an approximate value, in the environmental information.

38. A method of exhibiting an environmental information in an environmental information exhibiting system, comprising the steps of:

(a) storing primitive information relating to at least one product;
(b) analyzing a request transmitted from a client terminal (3, 3a) through a network (2);
(c) retrieving the primitive information, based on a result of analysis carried out in the step (b);
(d) manufacturing an environmental information, based on both the retrieved primitive information and the result of analysis carried out in the step (c); and
(e) exhibiting the environmental information through the network (2).

39. The method as set forth in claim 38, wherein the step (d) further includes:

calculating a value of a requested environmental information item in accordance with both a retrieved primitive information and a rule stored in a calculation rule table (13, 52); and
manufacturing an environmental information including the thus calculated value.

**40.** The method as set forth in claim 39, wherein the step (d) further includes the steps of:

judging the value, based on a judgment standard stored in a calculation rule table (13, 52), and
manufacturing an environmental information including the thus judged value.

**41.** The method as set forth in claim 38, further comprising the step of calculating an approximate value of a requested environmental information item, based on a predetermined standard value, if the primitive information is not available.

**42.** The method as set forth in claim 41, further comprising the step of including an indication that the calculated value is an approximate value, in the environmental information.

**43.** A method of exhibiting an environmental information in an environmental information exhibiting system including an environmental information server (1, 1a, 5, 5a), and a client terminal (3, 3a) connected to the environmental information server (1, 1a, 5, 5a) through a network (2),
the method comprising the steps of:

(a) making a request identifying an environmental information which a client terminal (3, 3a) user requests the environmental information server (1, 1a, 5, 5a) to exhibit;
(b) transmitting the request to the environmental information server (1, 1a, 5, 5a) through the network (2);
(c) storing a primitive information relating at least one product;
(d) storing rules and judgment standards in each of environmental information items in a calculation rule table (13, 52), a value of each of environmental information items being calculated in accordance with each of the rules, and a calculated value being compared to each of the judgment standards for judgment;
(e) retrieving the primitive information, based on a name of a product included in the request transmitted from the client terminal (3, 3a) through the network (2);
(f) manufacturing an environmental information in accordance with the request transmitted from the client terminal (3, 3a); and
(g) transmitting the environmental information to the client terminal (3, 3a) through the network (2).

**44.** The method as set forth in claim 43, further including the step of analyzing the request transmitted from the client terminal (3, 3a) through the network (2).

**45.** The method as set forth in claim 43, wherein, if the request includes exhibition of a name of a product, a name of an environmental information item, and a value of the environmental information item, a value of a requested environmental information item is calculated, based on a retrieved primitive information, the rules stored in the calculation rule table (13, 52), the name of a requested product, and the name of a requested environmental information item, and then, an environmental information including the thus calculated value is manufactured in the step (f).

**46.** The method as set forth in claim 43, wherein, if the request includes exhibition of a name of a product, a name of an environmental information item, and a judgement on a value of the environmental information item, a value of a requested environmental information item is calculated and judged, based on a retrieved primitive information, the rules stored in the calculation rule table (13, 52), the name of a requested product, and the name of a requested environmental information item, and an environmental information including the thus made judgement is manufactured in the step (f).

**47.** The method as set forth in claim 43, wherein, if the request includes exhibition of a process by which a value of environmental information item is calculated, and a name of an environmental information item, an environmental information including the process associated with the environmental information item, stored in the calculation rule table (13, 52), is manufactured in the step (f).

**48.** The method as set forth in claim 43, wherein, if the request includes exhibition of a judgment standard based on which a value of environmental information item is judged, and a name of an environmental information item, an environmental information including the judgment standard associated with the environmental information item, stored in the calculation rule table (13, 52), is manufactured in the step (f).

**49.** The method as set forth in claim 43, further comprising the step of calculating an approximate value of a requested environmental information item, based on a predetermined standard value, if the primitive information is not available.

**50.** The method as set forth in claim 49, further comprising the step of including an indication that the calculated value is an approximate value, in the environmental information.

**51.** A method of exhibiting an environmental information in an environmental information exhibiting system including at least one primitive information server (4, 4a), and at least one environmental information server (1, 1a, 5, 5a) connected to the primitive information server (4, 4a) through a network (2),

the method comprising the steps of:

(a) exhibiting a primitive information to the environmental information server (1, 1a, 5, 5a) through the network (2);
(b) manufacturing an environmental information, based on the primitive information exhibited through the network (2); and
(c) exhibiting the environmental information manufactured to a client terminal (3, 3a) through the network (2).

**52.** The method as set forth in claim 51, further comprising the steps of:

(d) analyzing a request transmitted from a client terminal (3, 3a) through the network (2); and
(e) retrieving the exhibited primitive information, based on a result of analysis carried out in the step (d),
the steps (d) and (e) being to be carried out between the steps (a) and (b),
the environmental information being manufactured, based on both the thus retrieved primitive information and the result of the analysis in the step (b).

**53.** The method as set forth in claim 51 or 52, further comprising storing a rule and a judgment standard in a calculation rule table (13, 52), calculating a value of an environmental information item in accordance with the rule, and judging the thus calculated value in accordance with the judgment standard.

**54.** The method as set forth in claim 51 or 52, further comprising the step of calculating an approximate value of a requested environmental information item, based on a predetermined standard value, if the primitive information is not available.

**55.** The method as set forth in claim 54, further comprising the step of including an indication that the calculated value is an approximate value, in the environmental information.

**56.** A recording medium readable by a computer, storing a program therein for causing a computer to act as such an environmental information server (1, 1a, 5, 5a) as defined in any one of claims 22 to 34.

**57.** A recording medium readable by a computer, storing a program therein for causing a computer to carry out such a method as defined in any one of claims 35 to 55.

# FIG. 1
## PRIOR ART

101 : ENVIRONMENTAL INFORMATION
      MEMORY
102 : ENVIRONMENTAL INFORMATION
      EXHIBITOR
301 : COMMUNICATOR
303 : INPUT INTERFACE
304 : DISPLAY UNIT

# FIG. 2

11 : PRIMITIVE INFORMATION MEMORY
12 : ENVIRONMENTAL INFORMATION MANUFACTURER
13 : CALCULATION RULE TABLE
14 : ENVIRONMENTAL INFORMATION EXHIBITOR
31 : COMMUNICATOR
33 : INPUT INTERFACE
34 : DISPLAY UNIT

# FIG. 3

11

| NAME OF PRODUCT | PRIMITIVE INFORMATION | |
|---|---|---|
| P | NORMAL POWER CONSUMPTION | $= \alpha$ |
| | MAXIMUM POWER CONSUMPTION | $= \beta$ |
| | ⋮ | |
| Q | NORMAL POWER CONSUMPTION | $= \gamma$ |
| | ⋮ | |

# FIG. 4

13

| ENVIRONMENTAL INFORMATION ITEM | PROCESS OF CALCULATION | JUDGMENT STANDARD |
|---|---|---|
| $CO_2$ EMISSION IN OPERATION | EQUATION 1 | $< 200kg \cdots A$<br>$\geqq 200kg \cdots B$ |
| $CO_2$ EMISSION IN FABRICATION | EQUATION 2 | $< 0.5kg \cdots A$<br>$\geqq 0.5kg \cdots B$ |
| ⋮ | ⋮ | ⋮ |

# FIG. 5

START

S 41

RECEIVING PRIMITIVE
INFORMATION

S 42

IS
THERE PRODUCT
NOT IDENTIFIED
?

NO

YES

S 43

RECEIVING CALCULATION PROCESS
& JUDGMENT STANDARD

S 44

IS THERE ITEM
NOT DEALT WITH
?

NO

YES

S 45

CALCULATION & JUDGMENT

S 46

MAKING ENVIRONMENTAL
INFORMATION

END

# FIG. 6

|  |  |  |  | RANK |
|---|---|---|---|---|
| PRODUCT P | $CO_2$ EMISSION IN OPERATION | 161 | k g | A |
|  | $CO_2$ EMISSION IN FABRICATION | 200 | k g | A |
|  | $\vdots$ |  | $\vdots$ | $\vdots$ |
| PRODUCT Q | $CO_2$ EMISSION IN OPERATION | 258 | k g | B |
|  | $CO_2$ EMISSION IN FABRICATION | 300 | k g | B |
|  | $\vdots$ |  | $\vdots$ | $\vdots$ |

# FIG. 7

| | | |
|---|---|---|
| PRODUCT P | $CO_2$ EMISSION IN OPERATION | 161 k g |
| | $CO_2$ EMISSION IN FABRICATION | 200 k g |
| | ⋮ | ⋮ |
| PRODUCT Q | $CO_2$ EMISSION IN OPERATION | 258 k g |
| | $CO_2$ EMISSION IN FABRICATION | 300 k g |
| | ⋮ | ⋮ |

# FIG. 8

| PRODUCT P | RANK OF $CO_2$ EMISSION IN OPERATION | A |
|-----------|-------------------------------------|---|
| PRODUCT Q | RANK OF $CO_2$ EMISSION IN OPERATION | B |

# FIG. 9

11 : PRIMITIVE INFORMATION MEMORY
13 : CALCULATION RULE TABLE
14 : ENVIRONMENTAL INFORMATION EXHIBITOR
15 : PRIMITIVE INFORMATION RETRIEVER
16 : INPUT ANALYZER
17 : ENVIRONMENTAL INFORMATION MANUFACTURER
31 : COMMUNICATOR
35 : INTERFACE

# FIG. 10

NAME OF
PRODUCT:

| |
|---|
| PRODUCT P |
| PRODUCT Q |
| . . . |

ENVIRNMENTAL
INFORMATION
ITEM:

| |
|---|
| CO₂ EMISSION IN OPERATION |
| CO₂ EMISSION IN FABRICATION |
| . . . |

RETRIEVAL

# FIG. 11

NEME OF
PRODUCT :

ENVIRONMENTAL
INFORMATION
ITEM :

RETRIEVAL

# FIG. 12

START

JUDGMENT
OR
EMISSION

ANALYZING
REQUEST

S 111

JUDGEMENT STANDARD
OR
CALCULATION PROCESS

NOTIFYING PRIMITIVE
INFORMATION RETRIEVER
OF PRODUCT NAME

S 112

NOTIFYING ENVIRONMENTAL
INFORMATION MANUFACTURER
OF REQUEST & ITEM

S 113

END

EP 1 107 142 A2

# FIG. 13

START

S 121 — IS EMISSION REQUEST ?

YES → S 122 CALCULATING EMISSION

NO

S 123 — IS JUDGEMENT REQUESTED ?

YES → S 124 MAKING JUDGEMENT

NO

S 125 — IS CALCULATION PROCESS REQUESTED ?

YES → S 126 RECEIVING CALCULATION PROCESS

NO

S 127 — IS JUDGEMENT STANDARD REQUESTED ?

YES → S 128 RECEIVING JUDGEMENT STANDARD

NO

S 129 MANUFACTURING ENVIRONMENTAL INFORMATION

END

33

# FIG. 14

PRODUCT P    $CO_2$ EMISSION IN OPERATION

141

143

| EMISSION | JUDGEMENT |

142

| CALCULATION PROCESS | JUDGEMENT STANDARD | — 144

PRODUCT P    $CO_2$ EMISSION IN FABRICATION

| EMISSION | JUDGEMENT |

| CALCULATION PROCESS | JUDGEMENT STANDARD |

PRODUCT Q    $CO_2$ EMISSION IN OPERATION

| EMISSION | JUDGEMENT |

| CALCULATION PROCESS | JUDGEMENT STANDARD |

145

ENVIRONMENTAL INFORMATION WINDOW

# FIG. 15

31 : COMMUNICATOR
33 : INPUT INTERFACE
34 : DISPLAY
41 : PRIMITIVE INFORMATION MEMORY
42 : PRIMITIVE INFORMATION EXHIBITOR
51 : ENVIRONMENTAL INFORMATON MANUFACTURER
52 : CALCULATION RULE TABLE
53 : ENVIRONMENTAL INFORMATION EXHIBITOR

# FIG. 16

31 : COMMUNICATOR
33 : INPUT INTERFACE
34 : DISPLAY
41 : PRIMITIVE INFORMATION MEMORY
42 : PRIMITIVE INFORMATION EXHIBITOR
51 : ENVIRONMENTAL INFORMATON MANUFACTURER
52 : CALCULATION RULE TABLE
53 : ENVIRONMENTAL INFORMATION EXHIBITOR
54 : PRIMITIVE INFORMATION RETRIEVER
55 : INPUT ANALYZER

# FIG. 17